# EUROPEAN PATENT APPLICATION

(11) **EP 1 923 980 A1**
(43) Date of publication of application: **21.05.2008**
(21) Application number: 06810128.6
(22) Date of filing: 07.09.2006
(51) Int. Cl.: H02K 15/02, H02K 1/02, H02K 1/18

(54) **METHOD OF PRODUCING CORE, AND STATOR CORE**

(30) Priority: 08.09.2005 JP 2005261152
(71) Applicant: TOYOTA JIDOSHA KABUSHIKI KAISHA, Toyota-shi, Aichi-ken, 471-8571 (JP)
(72) Inventor: TATEMATSU, Kazutaka, Aichi 471-8571 (JP); MIZUTANI, Ryoji, Aichi 471-8571 (JP); ENDO, Yasuhiro, Aichi 471-8571 (JP)
(74) Representative: TBK-Patent
(86) International application number: PCT/JP2006/318221
(87) International publication number: WO 2007/029875

(57) **Abstract**

There is provided in a die a cavity for placing a powder magnetic core material, and a recessed curved surface bent inward of the die is formed at the bottom surface of the cavity. The powder magnetic core material placed in the cavity is pressed by the pressing surface of a punch to the side and bottom surfaces of the cavity to form a split tooth body. As a result, a projected curved surface having a shape following the recessed curved surface is formed on the outer peripheral surface of the split tooth body. Then, two split tooth bodies are butted and joined together at the surfaces to which pressing force by the punch is applied, and thereby a tooth is assembled.

## Description

### TECHNICAL FIELD

The present invention relates to a method of producing a core, and a stator core, and more particularly to a core in which an outer peripheral surface of a tooth, on which a coil is to be mounted, has a projected curved surface, and a method of producing the core.

### BACKGROUND ART

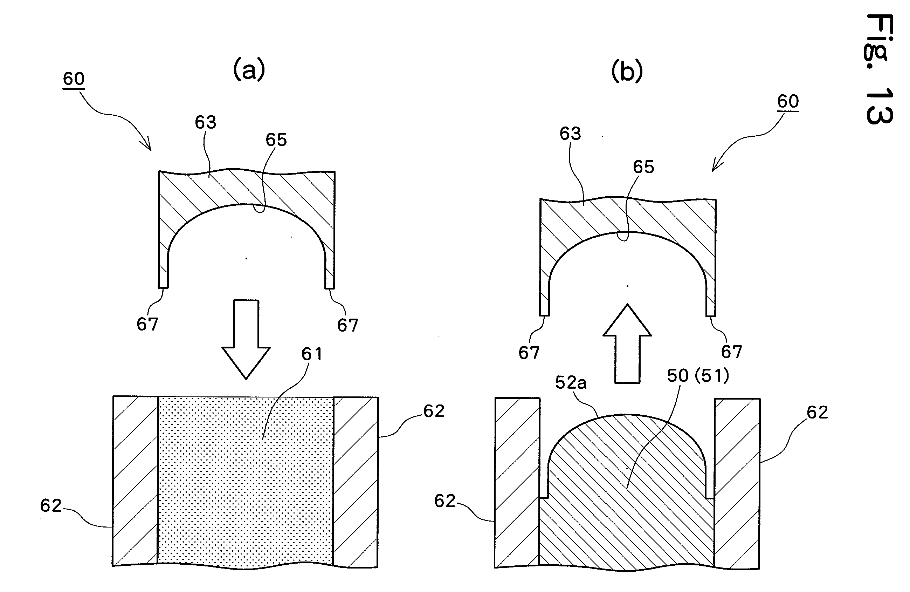

Related art concerning a method of producing cores of the type with which the present application is concerned is disclosed in JP 2004-242443 A. A method of producing a core in accordance with this related art will be described with reference to Fig. 13.

Figs. 13(a) and 13(b) are cross sectional views of a portion of a mold which is used for forming a tooth. A mold 60 is composed of a die 62 which is to be filled with a magnetic powder material 61 and a punch 63 which presses the magnetic powder material 61 within the die 62. When the punch 63 moves downward in the figures to press the magnetic powder material 61 within the die 62 by a strong force with a bottom surface of the punch 63, a core 50 is formed.

More specifically, the punch 63 includes a tooth pressing surface 65 for compressing the portion of the magnetic powder material 61 which is to be formed into each tooth 51 of the core 50. The tooth pressing surface 65 is formed as a recessed surface curved inwardly (upwardly in the figure) with respect to the punch 63.

The punch 63 includes a protection surface 67 at the bottom surface thereof at both right and left ends in the figure. The protection surface 67 is formed in a substantially horizontal plane and is connected to the tooth pressing surface 65. The protection surface 67 is provided so as to prevent damage of the punch 63, that is, a chipped punch, and is formed to have a minimum area sufficient for preventing a chipping of the punch.

As shown in Figs. 13(a) and 13(b), the magnetic powder material 61 which fills the die 62 is compressed by the punch 63 to thereby form the core 50. In this case, a portion of the magnetic powder material in contact with the tooth pressing surface 65 is formed as a curved surface 52a of the tooth 51 which is curved outwardly (upwardly in the figure) of the tooth 51.

According to the structure shown in JP 2004-242443 A, in which an outer periphery of the tooth 51, to which a coil is to be mounted, has a curved surface 52a, an increase in the surface pressure of the coil at a specific portion due to the contact with the edges can be prevented, thereby preventing short-circuiting between the coil and the tooth.

JP 2004-364402 A also discloses a method of producing a core.

In JP 2004-242443 A, the tooth pressing surface 65 which is curved inwardly as a recess is formed in the punch 63, in order to form the curved surface 52a on the outer peripheral surface of the tooth 51 to which a coil is to be mounted. In this method, however, portions of the punch 63 towards both ends with respect to the tooth pressing surface 65 have a sharp shape, leading to a disadvantage that the durability of the punch 63 is reduced.

The present invention enhances the durability of a mold which is used for molding a tooth.

### DISCLOSURE OF THE INVENTION

According to the present invention, there is provided a method of producing a core including a tooth having an outer peripheral surface to which a coil is to be mounted, the tooth having a projected curved surface on the outer peripheral surface thereof. This method comprises a molding process in which a powder magnetic core material is introduced into a forming mold which has a molding surface including a recessed curved surface and the powder magnetic core material is pressed by a press mold onto the molding surface, thereby molding a split tooth body, the split tooth body having a projected curved surface corresponding to the recessed curved surface on an outer peripheral surface thereof, and a joining process in which two split tooth bodies, each having been formed in the molding process, are joined to each other such that surfaces onto which a pressing force by the press mold has been applied are butted together, thereby assembling a tooth, wherein the projected curved surface on the outer peripheral surface of the tooth is formed corresponding to the recessed curved surface provided in the forming mold.

In accordance with one aspect of the invention, preferably, in the molding process, the powder magnetic core material is pressed onto the molding surface by a planar surface formed on the press mold, thereby molding the split tooth body.

In accordance with a further aspect of the invention, preferably, in the molding process, the powder magnetic core material is pressed onto the molding surface by the press mold, thereby molding a split yoke body as well as the split tooth body, and in the joining process, two split tooth bodies are joined together, and also two split yoke bodies, each having been molded in the molding process, are joined to each other such that surfaces onto which a pressing force of the press mold has been applied are butted together.

In accordance with another aspect of the invention, preferably, the core is a stator core of a motor.

In accordance with still another aspect of the invention, there is provided a stator core comprising a plurality of teeth arranged in a circumferential direction and projecting inward in the radial direction toward a rotor, wherein each tooth has an outer peripheral surface on which a coil is to be mounted, each tooth has a projected curved surface on the outer peripheral surface thereof, each tooth is formed by joining two split tooth bodies which are split with regard to a direction parallel to a rotary shaft of the rotor, and each split tooth body is molded from a powder magnetic core material.

According to the present invention, the projected curved surface on the outer periphery of the tooth can be formed corresponding to the recessed curved surface provided in the forming mold, which eliminates the need for forming a press mold which presses the powder magnetic core material within the mold in a sharp shape. This makes it possible to enhance the durability of a mold used for molding a tooth.

### BRIEF DESCRIPTION OF THE DRAWINGS

These and other objects of the invention will be explained in the description below, in connection with the accompanying drawings, in which:
Fig. 1 a cross sectional view schematically showing a stator core produced by a core production method according to an embodiment of the invention;
Fig. 2 is a perspective view schematically showing a structure of a tooth;
Fig. 3 is a perspective view schematically showing a structure of a split stator core body;
Fig. 4 is a cross sectional view schematically showing a die for use in the core production method according to the embodiment of the invention;
Fig. 5 is a cross sectional view schematically showing structures of a die and a punch for use in the core production method according to the embodiment of the invention;
Fig. 6 is a cross sectional view for explaining a molding process in the core production method according to the embodiment;
Fig. 7 is a perspective view for explaining a tooth joining process in the core production method according to the embodiment;
Fig. 8 is a cross sectional view for explaining a coil mounting process in the core production method according to the embodiment;
Fig. 9 is a cross sectional view for explaining a yoke joining process in the core production method according to the embodiment;
Fig. 10 is a cross sectional view schematically showing another structures of a die and a punch for use in the core production method according to the embodiment of the invention;
Fig. 11 is a perspective view schematically showing a structure of another tooth;
Fig. 12 is a cross sectional view schematically showing another structure of a die for use in the core production method according to the embodiment; and
Fig. 13 is a cross sectional view for explaining a core production method of related art.

### BEST MODE FOR CARRYING OUT THE INVENTION

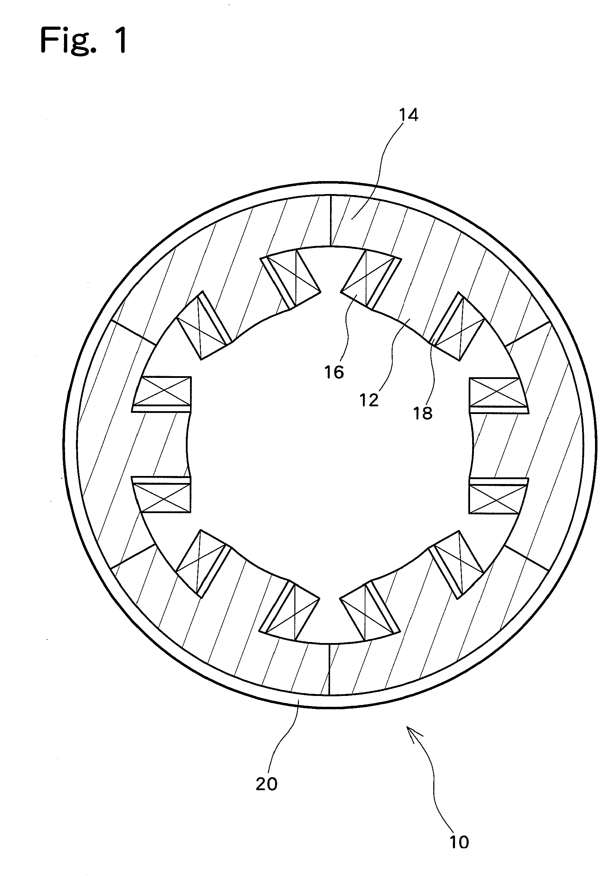

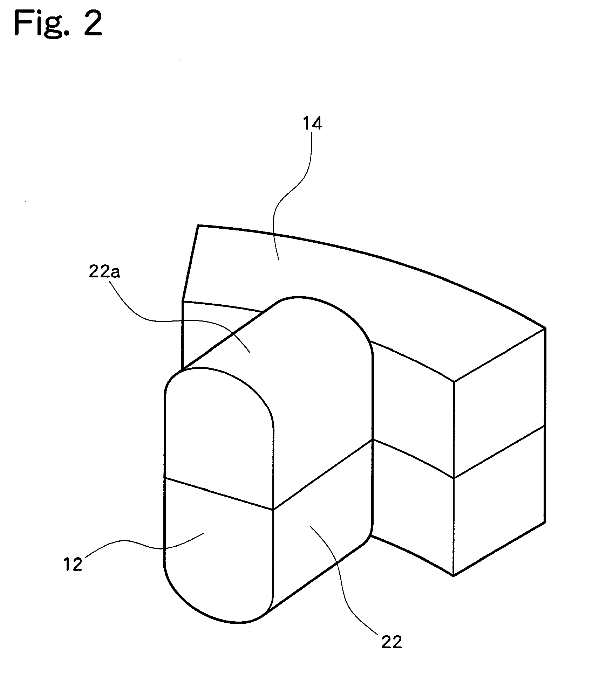

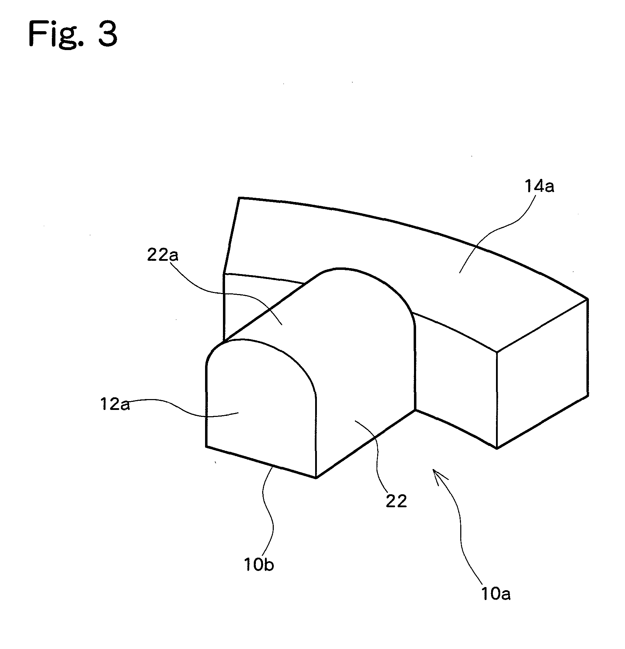

A preferred embodiment of the present invention will be described with reference to the drawings. Figs. 1 to 3 schematically show a structure of a stator core of a motor which is produced by a production method according to this embodiment of the present invention. Specifically, Fig. 1 shows a cross sectional view of a stator core, Fig. 2 shows a perspective view of a tooth, and Fig. 3 shows a perspective view of a split stator core body. The stator core 10 includes a plurality of teeth 12 arranged along the circumferential direction of the stator and projecting toward a rotor which is not shown (i.e. projecting inward in the radial direction of the stator), and a yoke 14 for magnetically and mechanically connecting the plurality of teeth 12 with each other. A rotary shaft of the rotor (which is in the vertical direction to the cross section of Fig. 1) is vertical (i.e. orthogonal) to the projecting direction of the tooth 12, and the rotor rotates along the arranging direction of the tooth 12 (i.e. the circumferential direction of the stator). It should be noted that Fig. 1 shows the stator core 10 in a state wherein a coil 16 is mounted on each tooth 12, but that in Figs. 2 and 3 the coil 16 to be mounted on the tooth 12 is not shown.

An outer peripheral surface 22 of each tooth 12 includes a projected curved surface 22a curved outward in the circumferential direction of the tooth. The coil 16 is to be mounted on the outer peripheral surface 22 of the tooth 12 with an insulating member 18 interposed between the outer peripheral surface 22 and the coil 16. As such, due to the projected curved surface 22a formed on the outer circumferential surface 22 of the tooth 12 to which the coil 16 is to be mounted, an increase in the surface pressure of the coil 16 at a specific portion due to contact with the edges can be prevented. Here, an insulating coating film may be applied on the outer peripheral surface 22 of the tooth 12 rather than providing the insulating member 18 between the tooth 12 and the coil 16.

The stator core 10 is formed by joining a plurality of split stator core bodies 10a which are split with regard to the direction parallel to the rotary shaft of the rotor (i.e. the vertical direction to the cross section of Fig. 1) and the circumferential direction of the stator. Each split stator core body 10a includes a split tooth body 12a which is a portion of the tooth 12 when split in the direction parallel to the rotator rotary shaft and a split yoke body 14a which is a portion of the yoke 14 when split in the direction parallel to the rotor rotary shaft and the stator circumferential direction. Each tooth 12 is formed of two split tooth bodies 12a joined with each other via the insulating member 18 surrounding the outer peripheral surfaces thereof. The yoke 14 is formed of a plurality of split yoke bodies 14a joined with each other by a band 20 provided along the outer peripheral surfaces of the split yoke bodies 14a.

A method of producing the stator core 10 according to the present embodiment will be described. In this embodiment, the stator core 10 is produced by a process which itself includes processes of molding, tooth joining, coil mounting, or yoke joining, and the tooth 12 and the yoke 14 are molded from a powder magnetic core material.

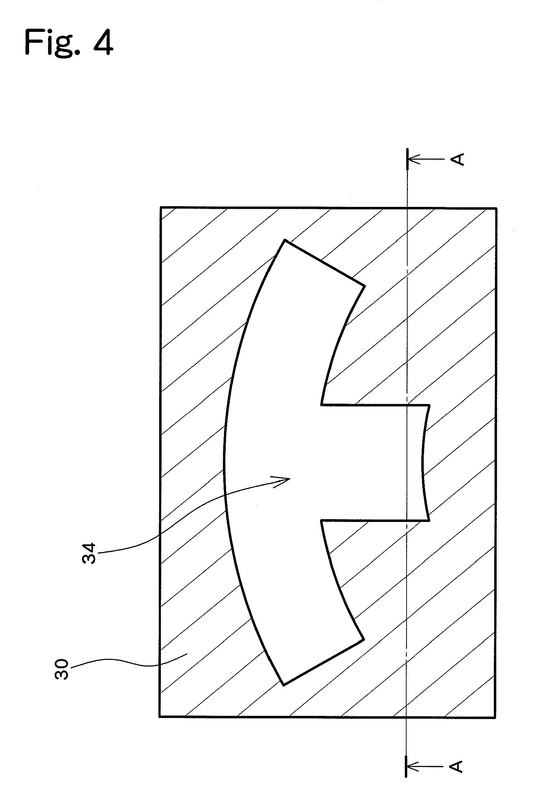

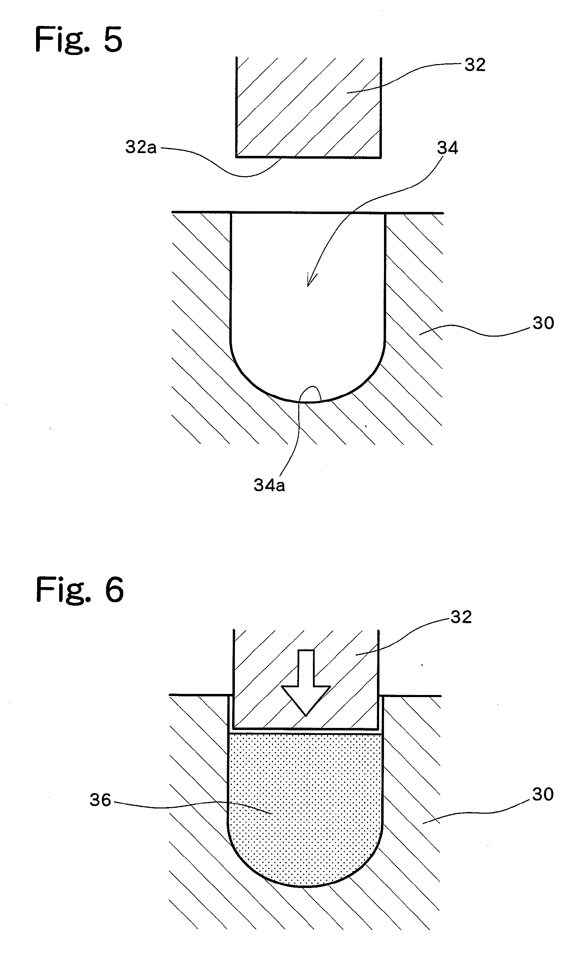

Figs. 4 and 5 schematically show a structure of a production device (mold) for use in the production of the stator core 10. The mold shown in Figs. 4 and 5 is used for molding the split stator core body 10a and includes a die 30 (a fixed forming mold) which is to be filled with a powder magnetic core material and a punch 32 (a movable pressing mold) which presses the powder magnetic core material placed in the die 30. Here, Fig. 4 shows a cross section of the die 30 in the direction vertical to the pressing direction of the punch 32, and Fig. 5 shows cross sections of the die 30 and the punch 32 along line A-A in Fig. 4.

The die 30 includes a cavity portion 34 into which a powder magnetic core material is introduced. The cavity portion 34 in this example is formed in accordance with the shape of the split stator core body 10b which is to be molded, and has a recessed curved surface 34a which is curved inward of the die 30 at the bottom surface thereof, as shown in Fig. 5. Further, a pressing surface 32a of the punch 32 for pressing the powder magnetic core material has a planar shape.

### Molding Process

In a molding process for press molding the split stator core body 10a by using the die 30 and the punch 32, a powder magnetic core material 36 is first introduced into the cavity portion 34 of the die 30. Then, as shown in a cross sectional view of Fig. 6, the punch 32 is inserted into the cavity portion 34 of the die 30 to press the powder magnetic core material 36 with the pressing surface (the planar surface) 32a formed on the punch 32. As such, the powder magnetic core material 36 is pressed to the side and bottom surfaces (molding surfaces) of the cavity portion 34 so that the powder magnetic core material 36 is press molded along the side and bottom surfaces of the cavity portion 34 and the pressing surface 32a (planar surface) of the punch 32. Consequently, the split stator core body 10a including the split tooth body 12a and the split yoke body 14a is formed. Here, due to the recessed curved surface 34a formed on the bottom surface of the cavity portion 34 to curve inward of the die, the split tooth body 12a has, on its outer peripheral surface 22, a projected curved surface 22a corresponding to the recessed curved surface 34a. Further, the pressing surface 32a of the punch 32 having a planar shape causes a surface 10b of the split stator core body 10a to which a pressing force of the punch 32 has been applied to have a planar shape. During the molding process described above, in addition to the split tooth body 12a having the projected curved surface 22a on the outer peripheral surface 22, the split yoke body 14a is also formed.

### Tooth Joining Process

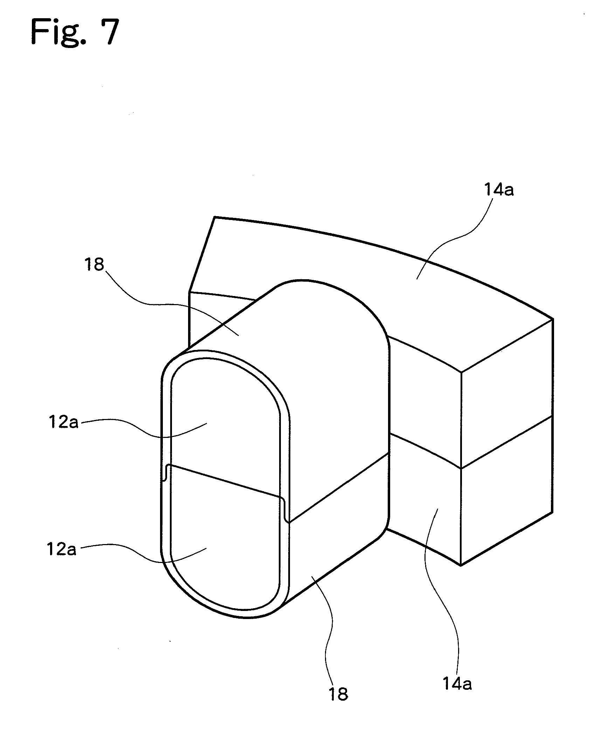

In the tooth joining process, two split stator core bodies 10a which have been formed in the molding process are joined such that the respective surfaces 10b to which the pressing force of the punch 32 has been applied are butted together, as shown in the perspective view of Fig. 7. With the split stator core bodies 10a joined as described above, the tooth 12 is assembled. Here, the split stator core bodies 10a can be joined by providing an insulating member 18 having a shape corresponding to the outer peripheral surface 22 of the tooth 12 so as to surround the outer peripheral surface 22 of the tooth 12, for example. Alternatively, the split stator core bodies 10a can be joined by adhesion. With the tooth joining process described above, two split tooth bodies 12a are joined together such that the respective surfaces to which the pressing force of the punch 32 has been applied are butted together, and also two split yoke bodies 14a are jointed together such that the respective surfaces to which the pressing force of the punch 32 has been applied are butted together.

### Coil Mounting Process

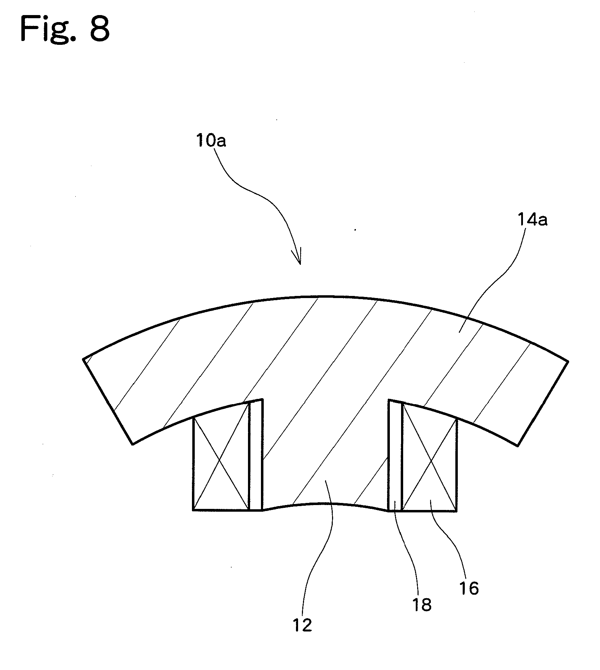

In the coil mounting process, as shown in the cross sectional view of Fig. 8, a conductor is wound around the outer peripheral surface 22 (the outer surface of the insulating member 18) of the tooth 12 which has been assembled in the tooth joining process to thereby form a coil 16. While in the example shown in Fig. 8 the coil 16 is formed on the outer peripheral surface 22 of the tooth 12 via the insulting member 18 mounted on the tooth 12, it is also possible to coat an insulating film on the outer peripheral surface 22 of the tooth 12 and then form the coil 16 thereon.

### Yoke Joining Process

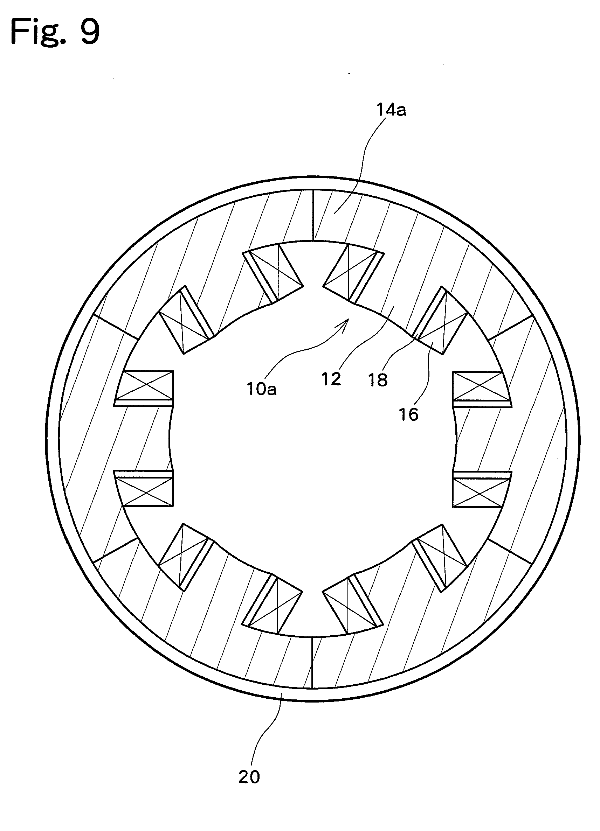

In the yoke joining process, as shown in the cross sectional view of Fig. 9, a plurality of split stator core bodies 10a each having the coil 16 mounted thereon are arranged in an annular shape and joined together, thereby assembling a yoke 14. While in the example shown in Fig. 9, a plurality of split stator core bodies 10a are joined together with a band 20 provided around the outer peripheral surface of the split stator core bodies 10a, the plurality of split stator core bodies 10a can also be joined by adhesion.

The stator core 10 having a projected curved surface 22a formed on the outer peripheral surface 22 of each tooth 12 to curve outward in the circumferential direction of the tooth 12 can be obtained as a result of the combination of the processes described above: the molding process, the tooth joining process, the coil mounting process, and the yoke joining process. Here, the order of each process is not limited to that described above. For example, the yoke joining process can precede the coil mounting process or the tooth joining process.

In the embodiment described above, the projected curved surface 22a of the outer peripheral surface 22 of the tooth 12 can be formed corresponding to the recessed curved surface 34a provided in the die 30, which eliminates the need to form the pressing surface 32a of the punch 32 in a sharp shape. This makes it possible to prevent an increase in the surface pressure of the coil 16 at a specific portion due to contact with the edges, allowing enhanced durability of the punch 32, and increased productivity of the stator core 10. Further, the recessed curved surface 34a which is provided in the die 30 for forming the projected curved surface 22a on the tooth 12 can exhibit an increased degree of freedom in the shape thereof, which also results in an increased degree of freedom in the shape of the projected curved surface 22a formed on the outer peripheral surface 22 of the tooth 12.

Further, in the embodiment described above, the punch 32 including the pressing surface 32a which has a planar shape can be used for molding both the two split tooth bodies 12a constituting the tooth 12. As a result, the productivity of the stator core 10 can be further increased.

An example modification of the present embodiment will next be described.

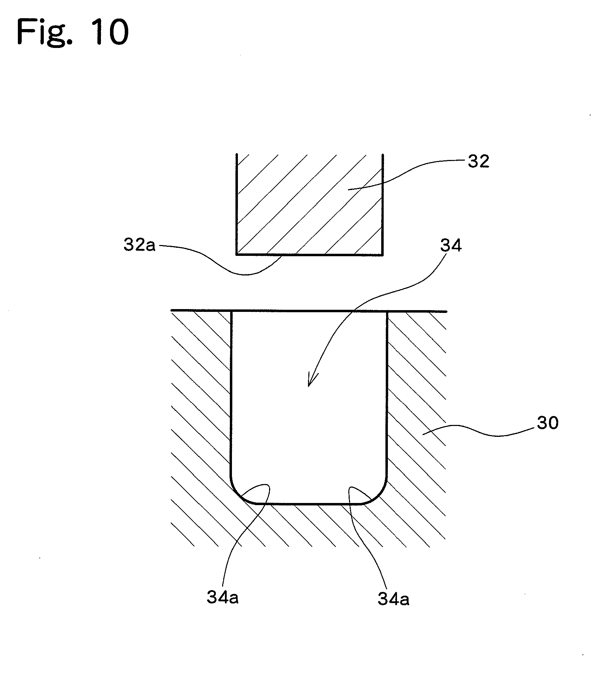

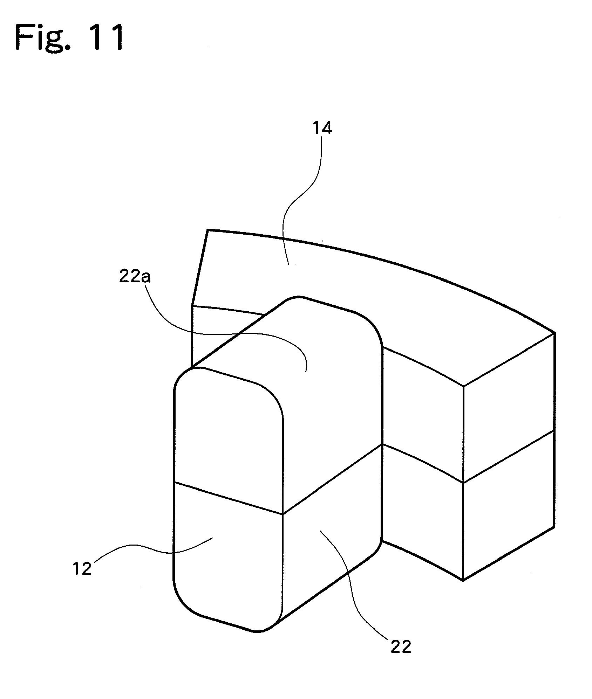

As shown in the cross sectional view of Fig. 10, the cavity portion 34 of the die 30 may have a recessed curved surface 34a as a curved surface connecting the side surfaces and the bottom surface of the cavity portion 34. Here, Fig. 10 shows cross sections of the die 30 and the punch 32 taken along line A-A of Fig. 4. In this modified example, as shown in the perspective view of Fig. 11, the cross section of the tooth 12 in the direction vertical to the radial direction of the stator has a substantially rectangular shape, and the projected curved surface 22a is formed at the corners of the outer peripheral surface 22 of the tooth 12. In other words, the tooth 12 is roundly molded at the corners of the outer peripheral surface 22 thereof.

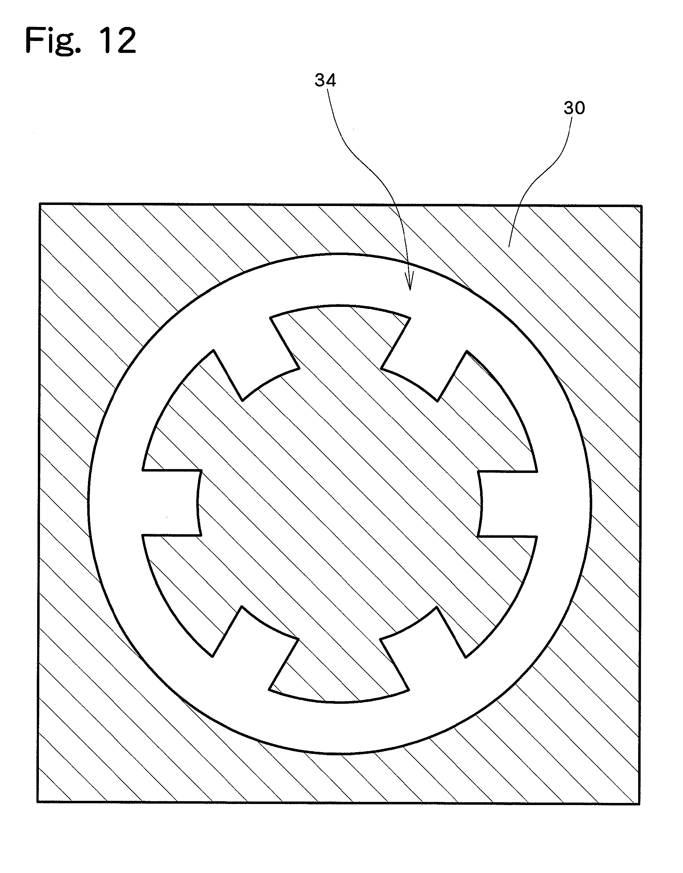

Further, in this modified example, in the molding process, in addition to a plurality of split tooth bodies 12a each having the projected curved surface 22a on the outer peripheral surface 22, a split yoke body 14a having an annular shape can be formed. Fig. 12 shows a cross section of the die 30 in such a case. Here, Fig. 12 shows a cross section of the die 30 in the direction vertical to the pressing direction of the punch 32. In this case, the tooth 12 and the yoke 14 can be assembled in the tooth joining process, and therefore the yoke joining process can be eliminated.

Further, while in the above examples production of the stator core 10 for use in a motor has been described, the range in which the production method according to the present embodiment is applicable is not limited to a stator core, and the production method according to the present embodiment can also be used to produce a rotor core, a transformer, and a reactor of a motor, for example.

While modes for implementing the present invention have been described, the present invention is not limited to such embodiments, and can be implemented in various modes without departing from the scope of the invention.

## Claims

1. A method of producing a core including a tooth having an outer peripheral surface to which a coil is to be mounted, the tooth having a projected curved surface on the outer peripheral surface thereof, the method comprising:
a molding process in which a powder magnetic core material is introduced into a forming mold which has a molding surface including a recessed curved surface and the powder magnetic core material is pressed by a press mold onto the molding surface, thereby molding a split tooth body, the split tooth body having a projected curved surface corresponding to the recessed curved surface on an outer peripheral surface thereof; and
a joining process in which two split tooth bodies, each having been formed in the molding process, are joined to each other such that surfaces onto which a pressing force by the press mold has been applied are butted together, thereby assembling a tooth,
wherein
the projected curved surface on the outer peripheral surface of the tooth is formed corresponding to the recessed curved surface provided in the forming mold.

2. The method according to Claim 1, wherein
in the molding process, the powder magnetic core material is pressed onto the molding surface by a planar surface formed on the press mold, thereby molding the split tooth body.

3. The method according to Claim 1, wherein
in the molding process, the powder magnetic core material is pressed onto the molding surface by the press mold, thereby molding a split yoke body as well as the split tooth body, and
in the joining process, two split tooth bodies are joined together, and also two split yoke bodies, each having been molded in the molding process, are joined to each other such that surfaces onto which a pressing force of the press mold has been applied are butted together.

4. The method according to Claim 1, wherein
the core is a stator core of a motor.

5. A stator core comprising a plurality of teeth arranged in a circumferential direction and projecting inward in the radial direction toward a rotor, wherein
each tooth has an outer peripheral surface on which a coil is to be mounted,
each tooth has a projected curved surface on the outer peripheral surface thereof,
each tooth is formed by joining two split tooth bodies which are split with regard to a direction parallel to a rotary shaft of the rotor, and
each split tooth body is molded from a powder magnetic core material.
